(19) **Europäisches Patentamt**
**European Patent Office**
**Office européen des brevets**

(11) **EP 2 806 247 B1**

(12) **FASCICULE DE BREVET EUROPEEN**

(45) Date de publication et mention
de la délivrance du brevet:
**26.02.2020 Bulletin 2020/09**

(51) Int Cl.:
*G01B 15/08* (2006.01)    *G01B 21/30* (2006.01)
*G01B 5/28* (2006.01)    *G01B 7/34* (2006.01)
*G01B 11/24* (2006.01)

(21) Numéro de dépôt: **14169343.2**

(22) Date de dépôt: **21.05.2014**

(54) **Procédé de caractérisation de la topographie d'une surface**

Charakterisierungsverfahren der Topografie einer Oberfläche

Method for characterising the topography of a surface

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.05.2013 FR 1354687**

(43) Date de publication de la demande:
**26.11.2014 Bulletin 2014/48**

(73) Titulaire: **Commissariat à l'Énergie Atomique
et aux Énergies Alternatives
75015 Paris (FR)**

(72) Inventeurs:
- **Beitia Caceres, Carlos
  38360 Noyarey (FR)**
- **Dettoni, Florent
  38400 Saint Martin D'Hères (FR)**

(74) Mandataire: **Ilgart, Jean-Christophe et al
BREVALEX
95, rue d'Amsterdam
75378 Paris Cedex 8 (FR)**

(56) Documents cités:
**EP-A1- 1 921 442        US-A1- 2002 086 531
US-A1- 2004 235 206        US-A1- 2011 144 943
US-A1- 2012 053 854**

- **J RAJA: "Recent advances in separation of
roughness, waviness and form", PRECISION
ENGINEERING, vol. 26, no. 2, 1 avril 2002
(2002-04-01), pages 222-235, XP055009004, ISSN:
0141-6359, DOI: 10.1016/S0141-6359(02)00103-4**

# EP 2 806 247 B1

**Description**

**DOMAINE TECHNIQUE**

L'invention concerne le domaine de la métrologie, et notamment celui de la caractérisation de topographies de surfaces. L'invention s'applique avantageusement au domaine de la microélectronique afin de caractériser des surfaces de dispositifs microélectroniques tels que des puces électroniques, mais également à d'autres domaines faisant appel à l'établissement de topographie sur de grandes distances, comme par exemple celui de la cartographie terrestre.

**ART ANTÉRIEUR**

La caractérisation de la topographie d'une surface, c'est-à-dire la caractérisation du relief de cette surface, peut être réalisée à partir de différentes techniques de mesure telles que la profilométrie mécanique, la microscopie à force atomique (AFM), la microscopie électronique à balayage (SEM), la microscopie électronique en transmission (TEM) ou encore la scattérométrie. Ces techniques de mesure peuvent être mises en œuvre pour réaliser des mesures en deux dimensions (2D), c'est-à-dire des mesures de la hauteur du relief le long d'une direction sur la surface à caractériser, ou des mesures en trois dimensions (3D) mesurant dans ce cas la hauteur du relief dans un plan de la surface à caractériser.

Les mesures réalisées avec ces techniques sont généralement réalisées sur une petite partie de la surface dont la topographie est destinée à être caractérisée. La mise en œuvre de ces techniques avec une taille d'acquisition limitée présente plusieurs inconvénients :

- les informations topographiques obtenues sont limitées à des zones bien spécifiques de la surface,
- les mesures réalisées correspondent à des mesures ponctuelles qui ne donnent aucune information sur l'environnement de la zone caractérisée, c'est-à-dire sur la topographie autour de la partie de la surface au niveau de laquelle les mesures sont réalisées,
- les mesures sont nécessairement réalisées au niveau d'une partie de la surface correspondant à une structure « simple » dont la taille et la densité sont fixes.

Par exemple, un polissage mécano-chimique d'une surface d'une puce électronique est généralement suivi et contrôlé par des mesures de topographie réalisées sur des motifs pleins, appelés « Test-Box », de cette surface, correspondant à des parties rectangulaires de section par exemple égale à 100 $\mu$m x 70 $\mu$m. Or, ces mesures qui sont généralement réalisées sur une longueur d'environ 200 $\mu$m en 2D ou sur une surface égale à environ 0,01 mm$^2$ en 3D ne sont pas toujours représentatives de la topographie globale de l'ensemble de la surface polie de la puce. En effet, le polissage mécano-chimique, ainsi que d'autres techniques de fabrication du domaine de la microélectronique, sont fortement dépendants de la taille et de la densité des motifs de la surface traitée, c'est-à-dire des éléments présents sur la surface comme par exemple des lignes d'interconnexion ou des plots de contact, ainsi que des effets de voisinage. Par conséquent, de telles mesures peuvent ne pas identifier des variations de topographie induites par des variations de densité ou de taille des motifs ou encore des effets de voisinage sur la surface caractérisée. L'augmentation de la criticité de certaines techniques de fabrication du domaine de la microélectronique tels que le polissage mécano-chimique a rendu ces limitations problématiques pour le développement des puces électroniques dans les futurs nœuds technologiques.

Une solution à ces problèmes consiste à réaliser les mesures de topographie sur de plus grandes surfaces, correspondant par exemple à des mesures sur des longueurs supérieures à environ 1 mm en 2D et sur des surfaces supérieures à environ 1mm$^2$ en 3D dans le domaine de la microélectronique. Différentes techniques telles que la profilométrie mécanique, la microscopie interférométrique ou encore la microscopie confocale permettent de réaliser une caractérisation de topographie pour de telles surfaces avec une résolution verticale (dimension selon laquelle s'étendent les variations mesurées de la topographie) de l'ordre du nanomètre et une résolution latérale (dans le plan de la surface caractérisée) de l'ordre du micromètre.

Toutefois, d'autres problèmes apparaissent dans ce cas. En effet, les équipements de mesure utilisés fournissent dans ce cas des données de mesure brutes incluant des variations liées à des contributions topographiques indésirables, c'est-à-dire des variations de hauteur qui ne font pas partie de la topographie destinée à être caractérisée. La plupart du temps, ces contributions topographiques indésirables sont liées à l'équipement de mesure et s'accentuent avec l'augmentation de la taille d'acquisition. Ces contributions topographiques indésirables peuvent être dues par exemple à des déformations de l'élément dont la surface est caractérisée, à la non-planéité du support sur lequel l'élément est disposé lors de la mesure, au principe de la technique de mesure mise en oeuvre, à des artefacts de mesure (notamment dans le cas des techniques de mesure optiques), etc. Un exemple typique de contribution topographique indésirable est la non-planéité du support de l'élément sur lequel celui-ci est disposé lors de la mesure, qui induit généralement une inclinaison linéaire, ou pente, dans le tracé des valeurs des données brutes de mesure.

A l'échelle micrométrique, il existe plusieurs façons de supprimer, dans les données de mesure, ces variations liées aux contributions topographiques indésirables. Il est par exemple possible de procéder à un ajustement polynomial des données de mesure, consistant par exemple à déterminer un polynôme, par exemple d'ordre 1 à 3, par régression à partir des données de mesure et soustraire le polynôme obtenu des données brutes de mesure. Ceci peut être fait sur l'ensemble des données de mesure ou seulement sur une ou plusieurs parties des données de mesure spécifiées manuellement par l'utilisateur. Il est également possible de filtrer directement les fréquences indésirables correspondant aux contributions topographiques indésirables dans l'espace fréquentiel des données de mesure.

Toutefois, dans le cas de mesures topographiques réalisées pour de grandes surfaces, l'ajustement polynomial se fait non seulement sur les contributions topographiques indésirables mais également sur les motifs de la surface caractérisée qui ne sont pas destinés à être modifiés ou effacés des données de mesure. Un tel ajustement polynomial supprime donc à la fois les variations de topographie liées aux contributions topographiques indésirables qui affectent les données de mesure, mais également les variations de topographie liées aux motifs, ou éléments de relief, de la surface caractérisée. De plus, un ajustement polynomial localisé uniquement sur certaines zones n'est pas non plus applicable en pratique à de grandes surfaces car ces zones sont trop nombreuses et trop petites pour être convenablement sélectionnées.

Enfin, le fait de directement filtrer en fréquence les variations liées aux contributions topographiques indésirables dans l'espace fréquentiel des données de mesure n'est pas non plus possible dans le cas de grandes surfaces car une fréquence liée à une de ces contributions topographiques indésirables peut correspondre à une fréquence caractéristique de présence de motifs. En supprimant cette fréquence, cela supprimerait également les variations de ces motifs, ce qui n'est pas souhaitable.

Les documents US 2004/235206 A1 et EP 1 921 442 A1 décrivent des dispositifs de caractérisation de topographies d'une surface.

## EXPOSÉ DE L'INVENTION

Un but de la présente invention est de proposer un procédé de caractérisation de la topographie d'une surface pouvant s'appliquer autant pour des petites surfaces que pour des grandes surfaces, et permettant de supprimer et/ou atténuer les variations liées à des contributions topographiques indésirables apparaissant dans des mesures topographiques de la surface sans affecter, ou en affectant peu, les autres variations topographiques mesurées, notamment celles de motifs pouvant être présents au niveau de la surface dont la topographie est caractérisée.

Pour cela, la présente invention propose un procédé de caractérisation de la topographie d'une surface, comportant au moins la mise en œuvre des étapes de :

- mesure de la topographie de la surface ;
- premier ajustement des données issues de la mesure de la topographie de la surface, réalisé à partir d'une première équation d'ordre m ;
- filtrage des données issues de la mise en œuvre du premier ajustement, supprimant une partie des données issues de la mise en œuvre du premier ajustement dont les valeurs sont supérieures à une valeur maximale et/ou inférieures à une valeur minimale ;
- détermination de coefficients d'ajustement des données issues de la mise en œuvre du filtrage, réalisée à partir d'une deuxième équation d'ordre n ;
- deuxième ajustement des données issues de la mise en œuvre du premier ajustement n'ayant pas subi l'étape de filtrage, réalisé à partir de la deuxième équation d'ordre n et des coefficients déterminés avec la mise en œuvre de la précédente étape de détermination ;

  n et m étant des entiers positifs supérieurs ou égaux à 1 et tels que $n \geq m$.

Ainsi, le premier ajustement mis en œuvre au cours de ce procédé réalise une première « mise à plat » des données de mesure topographiques, permettant de supprimer les contributions topographiques indésirables grossières. L'étape de filtrage mise en œuvre permet ensuite de réduire ou supprimer, au sein de ces données, le poids des motifs (qui correspondent, dans ces données, aux valeurs les plus grandes et/ou les plus petites, et qui sont supérieures et/ou inférieures à celles de la topographie du reste de la surface) en supprimant, au sein des données, le maximum de points traduisant leur présence. Des coefficients d'ajustement sont alors déterminés à partir de ces données filtrées, ce qui permet ensuite de réaliser, à partir de ces coefficients, un deuxième ajustement avec une équation d'ordre supérieur ou égal à celui de l'équation utilisée pour le premier ajustement, sur les données issues du premier ajustement (qui n'ont donc pas subies l'étape de filtrage), et effectuer ainsi une deuxième « mise à plat » uniquement sur les variations liées aux topographies autres que les motifs. Les étapes de filtrage et de détermination des coefficients d'ajustement n'affectent pas les données à partir desquelles le deuxième ajustement est réalisé. Le deuxième ajustement réalise donc au minimum une « rectification » du premier ajustement afin que les motifs ne soient pas inclus dans l'ajustement global (premier ajustement + deuxième ajustement) réalisé au cours de ce procédé.

Par rapport à un simple ajustement polynomial réalisé sur les données de mesure qui ne permet pas d'augmenter le degré du polynôme utilisé pour cet ajustement sans ajuster également les motifs, ce procédé permet au contraire, grâce notamment à l'étape de filtrage mise en oeuvre, d'utiliser, lors du deuxième ajustement, un degré ou un ordre d'équation bien supérieur à celui pouvant être utilisé dans le cas d'un unique ajustement des données de mesure, et réalisé ainsi un ajustement global beaucoup plus juste des données de mesure.

La surface dont la topographie est caractérisée peut correspondre à au moins une partie d'une face d'une puce électronique comprenant des motifs. Les motifs présents sur la surface caractérisée peuvent correspondre à des éléments d'épaisseurs ou de hauteurs plus importantes que celles des autres topographies de la surface, ces autres topographies étant localisées au niveau d'un plan principal de la surface caractérisée et pouvant correspondre aux rugosités de la surface caractérisée.

La mesure de la topographie de la surface peut être réalisée en deux dimensions sur une longueur supérieure ou égale à environ 1 mm et/ou telle que le rapport entre ladite longueur et une valeur d'échantillonnage spatial de la mesure (c'est-à-dire ici la distance entre deux points de mesure) soit supérieur ou égal à environ 1000 (par exemple, dans le domaine de la microélectronique, sur une longueur supérieure ou égale à environ 1 mm et avec un échantillonnage spatial inférieur ou égal à environ 1 $\mu$m), ou en trois dimensions sur une surface supérieure ou égale à environ 1 mm$^2$ et/ou telle que le rapport entre ladite surface et une valeur d'échantillonnage spatial de la mesure (c'est-à-dire ici la surface entre deux points de mesure) soit supérieur ou égal à environ 1 000 000 (par exemple, dans le domaine de la microélectronique, sur une surface supérieure ou égale à environ 1 mm$^2$ et avec un échantillonnage spatial inférieur ou égal à environ 1 $\mu$m$^2$). Le procédé est dans ce cas mis en œuvre sur des grandes surfaces.

Le premier ajustement et/ou la détermination des coefficients peuvent être mis en œuvre par régression, par exemple par la méthode des moindres carrés.

La première équation et/ou la deuxième équation peuvent être des polynômes ou des équations d'autre type telle que sinus ou cosinus. L'utilisation de polynômes permet notamment de réaliser le premier ajustement et/ou le deuxième ajustement par n'importe quelle fonction par interpolation.

Les paramètres $n$ et $m$ peuvent être tels que $m \in [1;10]$ et/ou $n \in [1;20]$.

Le procédé peut comporter en outre, entre l'étape de filtrage et l'étape de détermination de coefficients d'ajustement, la mise en œuvre d'une étape de réduction de la résolution des données issues de la mise en œuvre du filtrage, l'étape de détermination des coefficients d'ajustement pouvant être mise en œuvre à partir des données dont la résolution a été réduite. Une telle étape de réduction de la résolution des données permet, pour une puissance de calcul donnée, de réduire le temps d'exécution du procédé, ou pour un temps d'exécution du procédé donné, de pouvoir mettre en œuvre le procédé à partir de moyens de calcul de plus faibles capacités ou de plus faible puissance de calcul. Une telle étape de réduction de la résolution des données est avantageusement mise en œuvre lorsque ces données comportent un nombre de points très important, par exemple lorsque la mesure de la topographie de la surface est réalisée en trois dimensions.

La réduction de la résolution des données peut être mise en œuvre avec un facteur de réduction compris entre environ 2 et 100, c'est-à-dire telle que les données dont la résolution a été réduite comporte entre environ 2 et 100 fois moins de points de mesure que les données initiales.

Les étapes du procédé allant du filtrage jusqu'au deuxième ajustement des données peuvent être mises en œuvre une ou plusieurs fois à partir des données issues d'une précédente mise en œuvre du deuxième ajustement des données. Une telle répétition de ces étapes permet d'affiner l'ajustement global obtenu par la mise en œuvre du procédé. De plus, si un temps d'exécution minimum est souhaité, les degrés ou ordres des équations utilisées pour le premier ajustement et le deuxième ajustement lors de la première mise en œuvre de ces étapes peuvent être choisis comme correspondant à des valeurs élevées (avec par exemple m = 5 et n = 15 pour une surface caractérisée d'environ 9 cm$^2$). En effet, pour le premier ajustement des données, cela permet dans ce cas d'effectuer ultérieurement un filtrage des données plus efficace et donc d'augmenter le degré ou l'ordre de l'équation utilisée pour le deuxième ajustement des données. Et pour le deuxième ajustement des données, cela permet de réduire le nombre d'itérations des étapes du procédé et donc de diminuer le temps de calcul global du procédé.

L'utilisateur évalue donc un bon compromis entre rapidité de calcul et augmentation du risque d'erreur due à l'utilisation de degrés ou ordres trop élevés lors de la première mise en œuvre du premier ajustement et du deuxième ajustement.

La mesure de la topographie de la surface peut être réalisée en deux dimensions ou en trois dimensions par au moins l'une des techniques de mesure suivantes : profilométrie mécanique, microscopie à force atomique, microscopie interférométrique, microscopie confocale.

Il est également décrit un dispositif de caractérisation de la topographie d'une surface comportant des moyens de mise en œuvre du procédé tel que défini précédemment.

La présente invention concerne également un dispositif de caractérisation de la topographie d'une surface comportant des moyens de mesure de la topographie de la surface et des moyens de calcul aptes à mettre en œuvre le procédé tel que défini précédemment.

Il est également décrit un dispositif de caractérisation de la topographie d'une surface, comportant au moins :

- des moyens de mesure de la topographie de la surface ;
- des moyens de mise en œuvre d'un premier ajustement des données issues de la mesure de la topographie de la surface, à partir d'une première équation d'ordre m ;
- des moyens de filtrage des données issues de la mise en œuvre du premier ajustement, supprimant une partie des données issues de la mise en œuvre du premier ajustement dont les valeurs sont supérieures à une valeur maximale et/ou inférieures à une valeur minimale ;
- des moyens de détermination de coefficients d'ajustement des données issues de la mise en œuvre du filtrage, à partir d'une deuxième équation d'ordre n ;
- des moyens de mise en œuvre d'un deuxième ajustement des données issues de la mise en œuvre du premier ajustement n'ayant pas subi l'étape de filtrage, à partir de la deuxième équation d'ordre n et des coefficients déterminés avec la mise en œuvre de la précédente étape de détermination ;

n et m étant des entiers positifs supérieurs ou égaux à 1 et tels que $n \geq m$.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente un diagramme des étapes d'un procédé de caractérisation de la topographie d'une surface, objet de la présente invention, selon un mode de réalisation particulier;
- les figures 2 à 6 représentent des exemples de données issues des différentes étapes du procédé de caractérisation de la topographie d'une surface, objet de la présente invention, selon un mode de réalisation particulier;
- les figures 7 à 10 représentent des exemples de données topographiques obtenues après traitement par un procédé d'ajustement de l'art antérieur et par le procédé de caractérisation, objet de la présente invention, selon un mode de réalisation particulier;
- la figure 11 représente un dispositif apte à mettre en œuvre un procédé de caractérisation de la topographie d'une surface, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles tant que leur objet reste dans le cadre de l'invention telle que revendiquée dans les revendications 1 à 11.

## EXPOSÉ DÉTAILLÉ DE MODES DE RÉALISATION PARTICULIERS

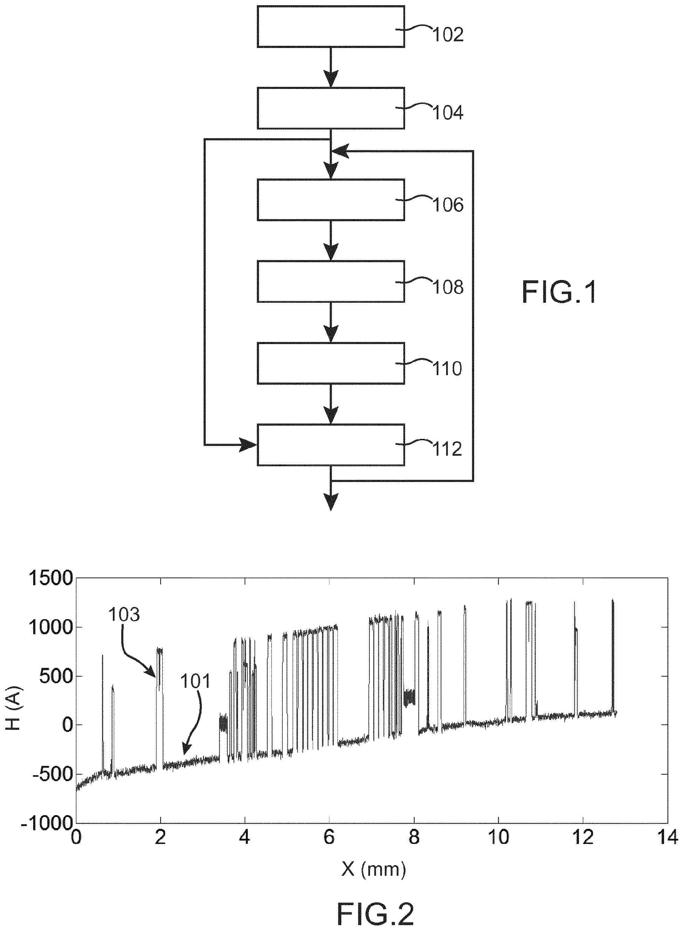

On se réfère tout d'abord à la figure 1 qui représente un diagramme des étapes d'un procédé de caractérisation de la topographie d'une surface selon un mode de réalisation particulier. Dans cet exemple, la surface dont la topographie est caractérisée correspond à une face d'une puce électronique sur laquelle sont présents plusieurs motifs tels que des plots de contact et des lignes métalliques d'interconnexion.

Au cours d'une première étape 102, la topographie de la surface à caractériser est mesurée. Cette mesure peut être réalisée en 2D ou en 3D, et par exemple par profilométrie mécanique, par microscopie à force atomique, par microscopie interférométrique, par microscopie confocale, ou toute autre technique de mesure topographique 2D ou 3D adaptée. Les données obtenues correspondent donc à des mesures de hauteur H, ou d'épaisseur, en fonction d'une position X sur une longueur faisant l'objet de la mesure dans le cas d'une mesure 2D (notées H(X)), ou à des mesures de la hauteur H, ou d'épaisseur, en fonction d'une position (X,Y) sur la surface au niveau de laquelle les mesures sont réalisées (notées H(X,Y)). De plus, cette mesure est ici réalisée sur une grande surface, c'est-à-dire sur une longueur X supérieure ou égale à environ 1 mm pour une mesure 2D ou sur une surface (X,Y) supérieure ou égale à environ 1 mm$^2$ pour une mesure 3D. Les données de mesure obtenues sont appelées données brutes car elles correspondent aux données non traitées délivrées par l'appareil de mesure topographique.

La figure 2 représente des exemples de données brutes de mesure obtenues par profilométrie mécanique, avec un rayon de courbure de la pointe de mesure d'environ 2 μm, réalisées sur une longueur de mesure d'un peu plus de 12 mm et avec une résolution latérale d'environ 4 μm. Ces données brutes correspondent à la hauteur H mesurée (en Angströms) sur une certaine longueur X (en millimètres) parcourue sur la surface à caractériser. On voit sur la figure 2 que les données mesurées font apparaître, sur l'ensemble de la surface caractérisée, des faibles variations de la hauteur H de quelques Angströms ou quelques dizaines d'Angströms, correspondant à la rugosité de la surface (par exemple celles désignées par la référence 101 sur la figure 2), ainsi que des plus grandes variations de hauteur H de plusieurs centaines d'Angströms correspondant aux motifs présents sur la surface caractérisée (par exemple celle désignée par la référence 103 sur la figure 2). Des faibles variations de rugosités sont également présentes au sommet de ces motifs. On voit également sur le tracé représenté sur la figure 2 que les mesures réalisées incluent une contribution topographique indésirable correspondant à la non-planéité du support sur lequel la puce est disposée, qui se traduit par une inclinaison linéaire du tracé des valeurs des données brutes de mesure de la topographie. Le bruit de la mesure est également présent dans ces données, correspond à des faibles variations de la hauteur H se confondant avec la rugosité. Une contribution topographique indésirable de type cylindrique due à la grande surface d'acquisition par rapport à la déformation de l'échantillon est également présente. Enfin, d'autres déformations plus fines sont également présentes sur les bords du tracé.

Une deuxième étape 104 correspondant à un premier ajustement des données brutes issues de la première étape 102 est ensuite mise en œuvre. Une étape d'ajustement, également appelée « fitting » en anglais, consiste à déterminer tout d'abord des coefficients d'une équation choisie (pouvant être quelconque) caractérisant une certaine forme géométrique, de manière à ce que cette forme se rapproche le plus possible des données à ajuster. Cet ajustement se fait par exemple par régression, et par exemple par la méthode des moindres carrés. Il s'agit dans ce cas de diminuer la somme des carrés des distances entre les points de l'équation générés par l'ajustement et les points correspondant aux données à ajuster. Une fois les coefficients de l'équation déterminés, les valeurs obtenues à partir de cette équation sont soustraites des valeurs des données brutes.

L'équation choisie pour ce premier ajustement 104 est ici un polynôme. Ce premier ajustement 104 réalisé, appelé dans ce cas ajustement polynomial, a alors pour but :

- de déterminer les coefficients $(a_0, a_1, a_2, ..., a_m)$ du polynôme du type :

$$f(x) = a_0 + a_1 x + a_2 x^2 + ... + a_m x^m \text{ dans le cas de données issues d'une}$$

dans le cas de données issues d'une mesure topographique 2D,
- de déterminer les coefficients $(a_0, a_1, a_2, ..., a_p)$ du polynôme du type :

$$f(x,y) = a_0 + a_1 x + a_2 y + a_3 xy + ... + a_p x^m y^m \text{ dans le cas de données}$$

dans le cas de données issues d'une mesure topographique 3D.

La valeur du paramètre $m$ correspond à l'ordre, ou degré, du polynôme, et donc à l'ordre de l'ajustement réalisé. Dans le cas de données issues d'une mesure topographique 2D, un polynôme d'ordre 1 correspond à une droite, et dans le cas de données issues d'une mesure topographique 3D, un polynôme d'ordre 1 correspond à un plan.

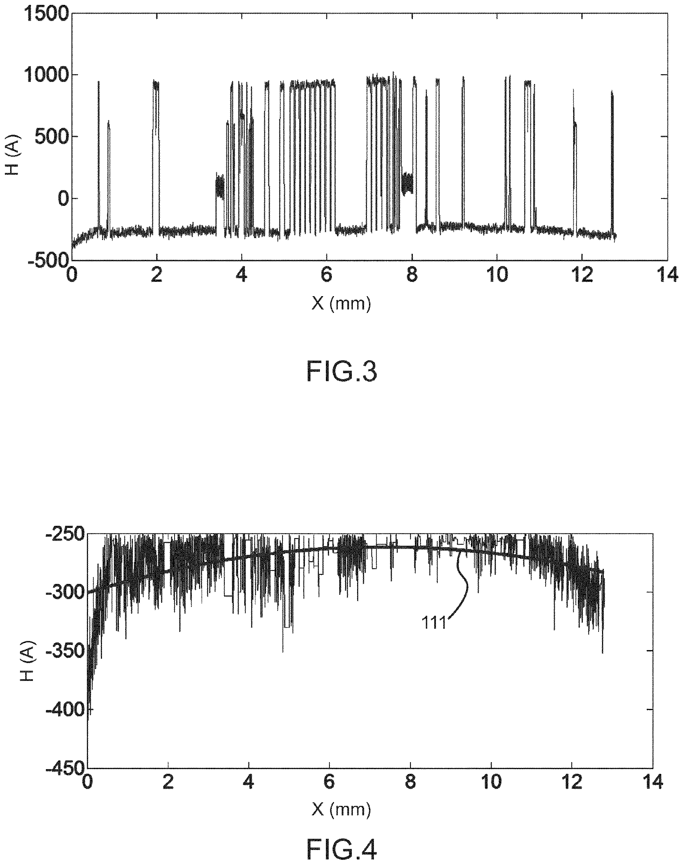

Ce premier ajustement 104 des données est mis en œuvre avec une équation d'ordre faible, par exemple avec $m$ compris entre 1 et 10. Ainsi, ce premier ajustement 104 permet de réaliser une première « mise à plat » des données topographiques brutes afin de supprimer les contributions topographiques indésirables grossières, c'est-à-dire la pente due à l'inclinaison de l'échantillon dont la surface est caractérisée dans l'exemple décrit ici. Afin de supprimer cette inclinaison, ce premier ajustement 104 est par exemple mis en œuvre afin de réaliser un ajustement polynomial d'ordre 1 du fait que la pente à supprimer peut être bien approximée par un polynôme d'ordre 1 qui correspond à une droite. Les données issues de ce premier ajustement 104 sont représentées sur la figure 3. Par rapport aux données brutes de la figure 2, on voit sur la figure 3 que ce premier ajustement 104 a permis de supprimer en grande partie la pente parasite présente dans les données de mesure due à l'inclinaison de la surface lors de la mesure.

L'ordre du polynôme utilisé pour ce premier ajustement 104 des données (ainsi que par extension les termes d'interaction x/y du polynôme, c'est-à-dire les coefficients de l'équation qui sont fonction des variables x et/ou y de l'équation) est choisi en fonction de la taille de la zone à ajuster, et donc de la longueur ou de la surface caractérisée, et du type d'échantillon. Par exemple, pour une taille d'acquisition très grande, par exemple supérieure ou égale à environ 1 cm pour une mesure en 2D ou supérieure ou égale à environ 9 cm² pour une mesure en 3D et un échantillon fortement contraint et donc fortement déformé, il est possible de réaliser ce premier ajustement 104 avec un polynôme d'ordre 3.

En variante, une équation autre qu'un polynôme peut être utilisée lors de la mise en œuvre de ce premier ajustement 104. Ainsi, il est possible d'utiliser une équation de type sinus ou cosinus telle que : $f(x) = a_0 + a_1\,cos(a_2x + a_3)$ ou $f(x) = a_0 + a_1\,sin(a_2x + a_3)$ dans le cas de données issues d'une mesure topographique 2D, ou $f(x, y) = a_0 + a_1\,cos(a_2x + a_3y + a_4)$ ou $f(x, y) = a_0 + a_1\,sin(a_2x + a_3y + a_4)$ dans le cas de données issues d'une mesure topographique 3D.

Les équations ci-dessus correspondent à des fonctions de type sinus ou cosinus d'ordre 1. Toutefois, il est également possible de faire appel à des fonctions de type sinus ou cosinus d'ordre m supérieur à 1, sous la forme :

$$f(x) = a_0 + a_1\,cos(a_2x + a_3) + a_4\,cos^2(a_5x + a_6) + ... + a_{q-2}\,cos^m(a_{q-1}x + a_q)$$

ou

$$f(x) = a_0 + a_1\,sin(a_2x + a_3) + a_4\,sin^2(a_5x + a_6) + ... + a_{q-2}\,sin^m(a_{q-1}x + a_q)$$

dans le cas de données issues d'une mesure topographique 2D, ou

$$f(x, y) = a_0 + a_1\,cos(a_2x + a_3y + a_4) + a_5\,cos^2(a_6x + a_7y + a_8) + ... + a_{q-3}\,cos^m(a_{q-2}x + a_{q-1}y + a_q)\ \text{ou}$$

ou

$$f(x, y) = a_0 + a_1\,sin(a_2x + a_3y + a_4) + a_5\,sin^2(a_6x + a_7y + a_8) + ... + a_{q-3}\,sin^m(a_{q-2}x + a_{q-1}y + a_q)\ \text{dans le cas de données issues d'une mesure}$$

dans le cas de données issues d'une mesure topographique 3D.

Ainsi, le type de l'équation utilisée ainsi que l'ordre m de cette équation peuvent être choisis en fonction du type de la ou des contributions topographiques indésirables destinées à être supprimées lors de ce premier ajustement 104. Ces paramètres peuvent notamment être choisis et appliqués de manière identique pour une même famille de mesures (même type d'échantillon, même taille d'acquisition, etc.). De plus, l'ordre m de l'ajustement réalisé peut également être choisi en fonction des ressources de calcul disponibles ainsi que du temps de calcul disponible pour la mise en œuvre de cette étape.

Comme expliqué précédemment pour les procédés d'ajustement de l'art antérieur, cet ajustement polynomial se fait non seulement sur les contributions topographiques indésirables mais également sur les motifs de la surface caractérisée. Les étapes ultérieures du procédé décrites ci-dessous vont permettre de corriger cela.

Après la deuxième étape 104 d'ajustement mise en œuvre avec une équation d'ordre m faible, une troisième étape 106 de filtrage des données ajustées issues de la deuxième étape 104 est mise en œuvre. Ce filtrage 106 est mis en œuvre afin de supprimer les variations liées à la présence des motifs et qui correspondent donc aux grands pics de plusieurs centaines d'Angströms visibles sur la figure 3. Cela correspond à filtrer en hauteur les données ajustées issues du premier ajustement 104. Ce filtrage est réalisé en définissant une valeur maximale et/ou une valeur minimale au-delà de laquelle ou desquelles les points de mesure ne sont pas pris en compte, et cela afin de supprimer des motifs se trouvant au-dessus et/ou en dessous d'un plan de référence de la surface caractérisée, selon le type de surface caractérisée. Pour cela, les données sont filtrées en hauteur, ce qui permet de ne conserver que les points de mesure correspondant à la « rugosité » de la surface caractérisée au niveau du plan de référence. Les données filtrées issues de cette troisième étape 106 de filtrage sont représentées sur la figure 4.

Dans cet exemple, seuls les points de mesure de valeurs supérieures à - 250 Angström sont conservés. Lorsque le procédé est mis en œuvre dans le domaine de la microélectronique, le filtrage en hauteur permet de supprimer des points de mesure dont les valeurs sont plus hautes et/ou plus basses de quelques nanomètres ou quelques dizaines de nanomètres par rapport aux autres points qui font partie du plan de référence de la surface caractérisée. La ou les valeurs des hauteurs maximum et/ou minimum à supprimer peuvent être choisies en fonction du type des motifs présents sur la surface caractérisée, et appliquées de manière identique pour une même famille de mesures, c'est-à-dire pour des surfaces présentant des motifs de nature similaire.

Après la troisième étape 106 de filtrage, une quatrième étape 108 de réduction de la résolution des données filtrées issues de la troisième étape 106 est mise en œuvre. En effet, les mesures de topographie réalisées sur grandes distances ou de grandes surfaces génèrent un grand nombre de points de mesure (par exemple environ 64 millions de points de mesure pour une surface d'environ 9 cm$^2$). De plus, les contributions topographiques indésirables restantes destinées à être ajustées au cours d'un deuxième ajustement du procédé correspondent à des variations de hauteur sur de longues distances ou sur des surfaces importantes. Il est donc possible de réduire le nombre de points à traiter sans impacter le résultat final.

Cette étape 108 de réduction de la résolution des données filtrées autorise donc, pour une capacité de calcul donnée, de pouvoir réaliser ultérieurement sur ces données un deuxième ajustement d'ordre supérieur à celui pouvant être réalisé à partir de données dont la résolution n'a pas été réduite. Par exemple, sans changement de résolution, l'ordre du polynôme utilisé pour la mise en œuvre d'un deuxième ajustement, réalisé avec un ordinateur classique comprenant par exemple 2 Go de RAM, serait limité à environ 6 pour une surface caractérisée d'environ 9 cm$^2$ (soit environ 64 millions de points de mesure). En diminuant la résolution des données, par exemple d'un facteur compris entre environ 2 et 100 et par exemple égal à 64, l'ordre de ce deuxième ajustement peut être augmenté de plusieurs dizaines de degrés. De plus, dans un contexte de production industrielle, une diminution de la résolution des données permet d'augmenter la vitesse de traitement du procédé et donc d'augmenter la cadence de production des puces dont la topographie de surface est caractérisée au cours de cette production. Une diminution de la résolution des données d'un facteur 2 peut par exemple permettre de réduire le temps de calcul d'un dixième de seconde, ce qui est intéressant lorsque le procédé est par exemple répété plusieurs milliers de fois ou plusieurs dizaines de milliers de fois par jour.

Dans le cas d'une puce de surface comprise entre environ 1 cm$^2$ et 2 cm$^2$, telle qu'un microprocesseur, une diminution de la résolution des données d'un facteur égal à 16 peut être réalisée.

Le facteur de réduction de la résolution pouvant être appliqué est toutefois choisi afin de ne pas trop atténuer ou faire disparaître les contributions topographiques indésirables destinées à être supprimées par le deuxième ajustement mis en œuvre ultérieurement. Ces contributions topographiques indésirables présentent toutefois généralement des fréquences basses, ce qui permet de réaliser une diminution de résolution importante et donc d'obtenir un gain de cadence élevé.

Les paramètres de cette baisse de résolution des données sont donc adaptés au contexte et aux contraintes de mise en œuvre du procédé de caractérisation. La valeur de la réduction de la résolution appliquée peut être choisie et appliquée de manière identique pour une même famille de mesures. De plus, le facteur appliqué pour cette baisse de la résolution est également choisi en fonction de la taille d'acquisition réalisé, et donc du nombre de points de mesure initial.

En variante, si le contexte et les capacités de calcul le permettent, il est possible de ne pas mettre en œuvre cette quatrième étape 108 de baisse de la résolution des données.

Après la quatrième étape 108 de baisse de la résolution des données (ou directement après la troisième étape 106 de filtrage si la quatrième étape 108 n'est pas mise en œuvre), une cinquième étape 110 de détermination de coefficients d'ajustement des données issues de la quatrième étape 108 (ou des données issues de la troisième étape 106) est mise en œuvre. Du fait de la troisième étape 106 de filtrage précédemment réalisée, la discrimination entre les motifs qui ne sont pas destinés à être ajustés et les contributions topographiques indésirables destinés à être ajustées est plus aisée en raison du nombre moins important de points représentant les motifs destinés à ne pas être ajustés. Cette cinquième étape 110 n'effectue aucune mise en plat des données, le but de cette étape étant de déterminer des coefficients d'une équation d'ajustement (par exemple un polynôme) à partir des données filtrées et dont la résolution a éventuellement été réduite. Une courbe 111 représentant graphiquement le polynôme dont les coefficients ont été obtenus par la mise en œuvre de cette cinquième étape 110 d'ajustement, ici mise en œuvre avec un ordre 2, est représentée sur la figure 4.

Comme pour le premier ajustement 104 précédemment réalisé, l'ordre $n$ du polynôme utilisé pour cette étape est choisi en fonction de la taille de la zone à ajuster et du type d'échantillon. Cet ordre $n$ est supérieur ou égal à l'ordre $m$ de l'équation utilisée pour le premier ajustement 104. Cette cinquième étape 110 est par exemple mise en œuvre avec un polynôme d'ordre $n$ compris entre 1 et 10, ou même avec un polynôme d'ordre $n$ supérieur à 10 si les capacités de calcul et/ou le temps d'exécution le permettent. Il est également possible de faire appel à une équation autre qu'un polynôme, par exemple de type sinus ou cosinus telle que précédemment décrite, d'ordre $n$ supérieur ou égal à $m$.

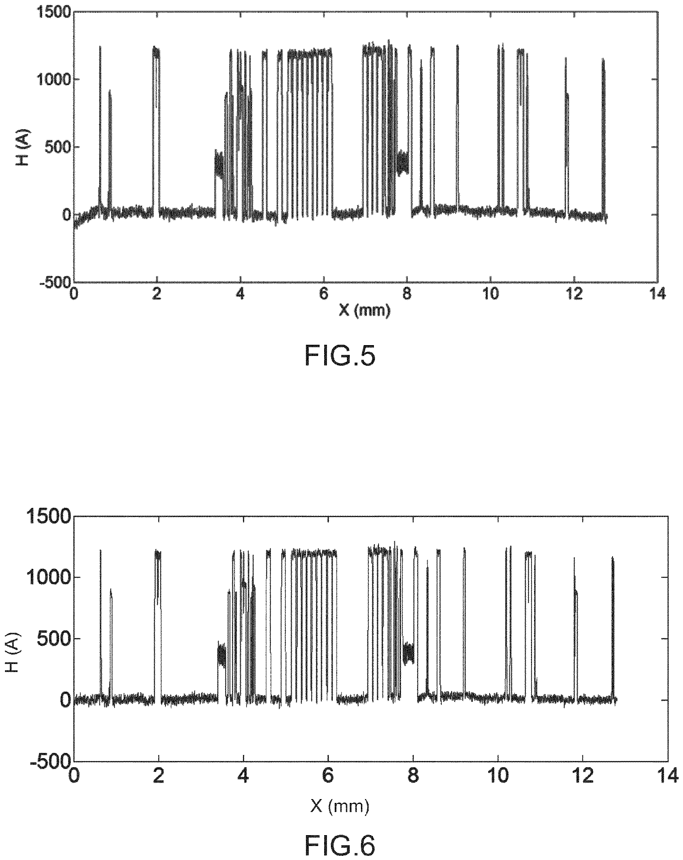

Les coefficients déterminés lors de la cinquième étape 110 sont ensuite utilisés afin de réaliser une sixième étape 112 correspondant à un deuxième ajustement des données issues du premier ajustement 104 mise en œuvre à partir de l'équation formulée avec ces coefficients. Ce deuxième ajustement 112 effectue une nouvelle mise à plat des données topographiques permettant de retirer la forme géométrique définie par l'équation dont les coefficients ont été déterminés lors de la mise en œuvre de la cinquième étape 110. Les données issues de ce deuxième ajustement 112 sont représentées sur la figure 5.

On obtient ainsi des données topographiques de la surface caractérisée dans lesquelles les contributions topographiques indésirables sont supprimées plus précisément qu'avec une seule étape d'ajustement des données.

L'ajustement global réalisé via la mise en œuvre des étapes 104 à 112 du procédé permet donc de supprimer les contributions topographiques indésirables tout en affectant pas ou peu les variations liées aux motifs de la surface caractérisée.

Afin d'optimiser encore plus le résultat, il est possible de répéter les étapes 106 à 112 une ou plusieurs fois à partir des données obtenues à la sixième étape 112. De cette manière, lors de la ou des nouvelles mises en œuvre de l'étape 106 de filtrage en hauteur, le procédé applique un filtre supprimant encore plus de points représentant les motifs de la surface caractérisée, rendant possible la suppression de l'intégralité des points représentant les motifs lors du ou des nouveaux filtrages 106. Cela permet d'effectuer une nouvelle mise à plat des données par ajustement de degré quelconque sans crainte d'ajuster les motifs. Le nombre d'itération des étapes 106 à 112 est adapté au contexte et aux contraintes de mise en œuvre du procédé de caractérisation, ce nombre pouvant être choisi et appliqué de manière identique pour une même famille de mesures. Les données topographiques obtenues après une itération et avec une sixième étape 112 mise en œuvre avec un polynôme d'ordre n = 10 sont représentées sur la figure 6.

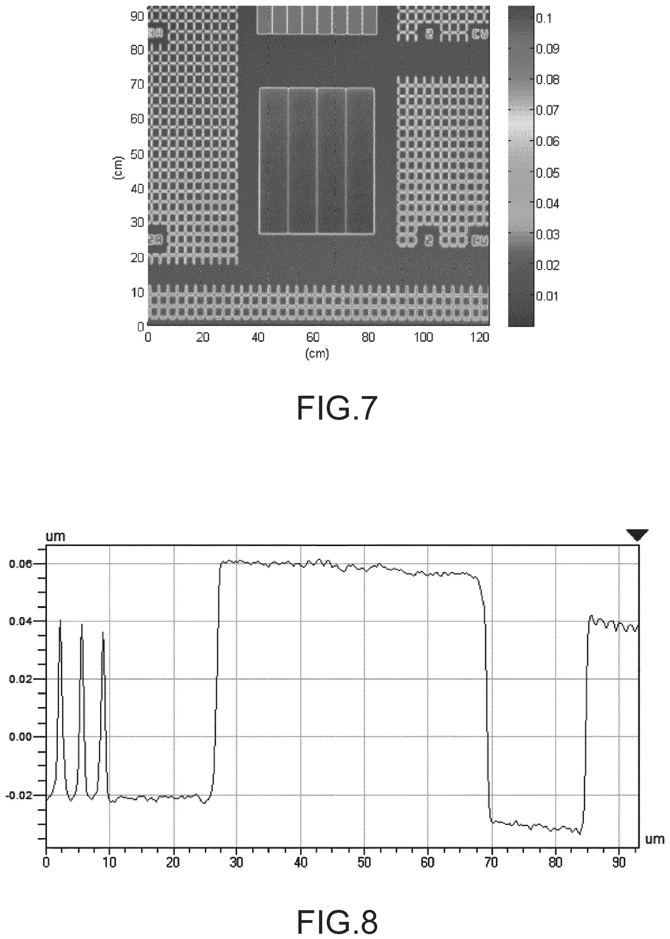

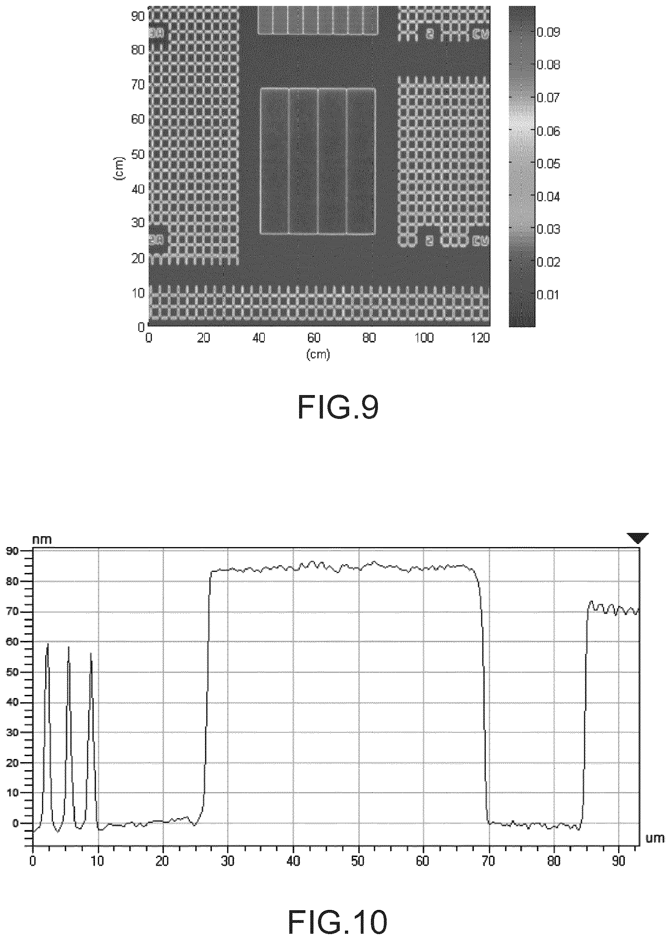

La figure 7 représente un exemple de données de mesure de topographie 3D obtenues à l'issu de la mise en œuvre d'un procédé de caractérisation de la topographie d'une surface d'une puce électronique de type CMOS réalisée en technologie 65 nm, au cours duquel un seul ajustement (avec un polynôme d'ordre 2) des données est réalisé. La figure 8 représente le profil (mesure de topographie 2D) correspondant au tracé représenté par la flèche de la figure 7. En comparaison, la figure 9 représente les données (mesure de topographie 3D) obtenues à l'issu de la mise en œuvre d'un procédé de caractérisation de la topographie de cette même surface, au cours duquel les étapes 102 à 112 précédemment décrites sont mises en oeuvre, avec un premier ajustement réalisé avec un polynôme d'ordre $m = 1$ et un deuxième ajustement réalisé avec un polynôme d'ordre $n = 2$, les étapes 102 à 112 étant mises en œuvre une seule fois, sans itération supplémentaire de ces étapes. La figure 10 représenté le profil (mesure de topographie 2D) correspondant au tracé représenté par la flèche de la figure 9. En comparant notamment les figures 8 et 10, on voit que la mise en œuvre du procédé comportant les étapes 102 à 112 a permis de supprimer bien plus efficacement les contributions topographiques indésirables (voir notamment sur la figure 8 les pentes présentes pour x > 30 $\mu$m).

Bien que le procédé précédemment décrit s'applique avantageusement pour des mesures de topographie réalisées sur des surfaces importantes (distance supérieure ou égale à environ 1 mm pour une mesure 2D ou surface supérieure ou égale à environ 1 mm$^2$ pour une mesure 3D), ce procédé peut également être mis en œuvre pour des mesures de topographie réalisées sur de plus petites surfaces.

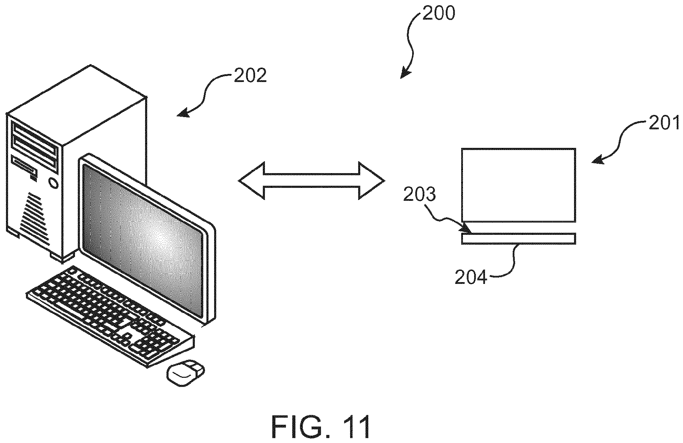

Le procédé de caractérisation de la topographie de surface peut être mis en œuvre par un dispositif d'estimation de perméation 200 tel que représenté par exemple sur la figure 11. Le dispositif 200 comporte un dispositif de mesure 201 tel que précédemment décrit (profilomètre mécanique, AFM, microscope confocale, microscope interférométrique, etc.) permettant de réaliser les mesures topographiques d'une surface 203 à caractériser (ici une surface 203 d'une puce électronique 204), ainsi qu'un ou plusieurs ordinateurs 202, ou unités de calcul, aptes à former une interface d'entrées/sorties avec l'opérateur. Le ou les ordinateurs 202 sont reliés au dispositif de mesure 201 afin notamment de piloter le dispositif de mesure 201, recevoir les données de mesures délivrés par le dispositif de mesure 201, et réaliser ensuite les étapes du procédé de caractérisation précédemment décrites.

Dans les exemples précédemment décrits, le procédé de caractérisation de la topographie de surface est mis en œuvre pour caractériser des surfaces de dispositifs microélectroniques. Toutefois, ce procédé peut également être mis en œuvre pour d'autres domaines tels que celui de la cartographie, par exemple terrestre. Ce procédé pourrait par exemple être mis en œuvre avec des mesures réalisées à l'échelle d'un pays, par exemple pour une surface de 550 000 km$^2$, avec un échantillonnage spatial de 0,1 km$^2$ permettant de voir les reliefs montagneux les plus étroits. Pour ce type d'application, les mesures peuvent être réalisées par exemple par satellite.

## Revendications

**1.** Procédé de caractérisation de la topographie d'une surface (203), comportant au moins la mise en œuvre des étapes de :

- mesure (102) de la topographie de la surface (203) ;
- premier ajustement (104) des données issues de la mesure (102) de la topographie de la surface (203), réalisé à partir d'une première équation d'ordre m ;
- filtrage (106) des données issues de la mise en œuvre du premier ajustement (104), supprimant une partie des données issues de la mise en œuvre du premier ajustement (104) dont les valeurs sont supérieures à une valeur maximale et/ou inférieures à une valeur minimale ;
- détermination (110) de coefficients d'ajustement des données issues de la mise en œuvre du filtrage (106), réalisée à partir d'une deuxième équation d'ordre n ;
- deuxième ajustement (112) des données issues de la mise en œuvre du premier ajustement (104) n'ayant pas subi l'étape de filtrage (106), réalisé à partir de la deuxième équation d'ordre $n$ et des coefficients déterminés avec la mise en œuvre de la précédente étape de détermination (110) ;

$n$ et $m$ étant des entiers positifs supérieurs ou égaux à 1 et tels que $n \geq m$.

2. Procédé selon la revendication 1, dans lequel la surface (203) correspond à au moins une partie d'une face d'une puce électronique (204) comprenant des motifs.

3. Procédé selon l'une des revendications précédentes, dans lequel la mesure (102) de la topographie de la surface (203) est réalisée en deux dimensions sur une longueur supérieure ou égale à environ 1 mm et/ou telle que le rapport entre ladite longueur et une valeur d'échantillonnage spatial de la mesure est supérieur ou égal à environ 1000, ou en trois dimensions sur une surface supérieure ou égale à environ 1 mm$^2$ et/ou telle que le rapport entre ladite surface et une valeur d'échantillonnage spatial de la mesure est supérieur ou égal à environ 1000 000.

4. Procédé selon l'une des revendications précédentes, dans lequel le premier ajustement (104) et/ou la détermination (110) des coefficients sont mis en œuvre par régression.

5. Procédé selon l'une des revendications précédentes, dans lequel la première équation et/ou la deuxième équation sont des polynômes ou des équations de type sinus ou cosinus.

6. Procédé selon l'une des revendications précédentes, dans lequel les paramètres n et m sont tels que $m \in [1;10]$ et/ou $n \in [1;20]$.

7. Procédé selon l'une des revendications précédentes, comportant en outre, entre l'étape de filtrage (106) et l'étape de détermination (110) de coefficients d'ajustement, la mise en œuvre d'une étape de réduction (108) de la résolution des données issues de la mise en œuvre du filtrage (106), l'étape de détermination (110) des coefficients d'ajustement étant mise en œuvre à partir des données dont la résolution a été réduite.

8. Procédé selon la revendication 7, dans lequel la réduction (108) de la résolution des données est mise en œuvre avec un facteur de réduction compris entre environ 2 et 100.

9. Procédé selon l'une des revendications précédentes, dans lequel les étapes du procédé allant du filtrage (106) jusqu'au deuxième ajustement (112) des données sont mises en œuvre une ou plusieurs fois à partir des données issues d'une précédente mise en œuvre du deuxième ajustement (112) des données.

10. Procédé selon l'une des revendications précédentes, dans lequel la mesure (102) de la topographie de la surface (203) est réalisée en deux dimensions ou en trois dimensions par au moins l'une des techniques de mesure suivantes : profilométrie mécanique, microscopie à force atomique, microscopie interférométrique, microscopie confocale.

11. Dispositif (200) de caractérisation de la topographie d'une surface (203) comportant des moyens (201) de mesure de la topographie de la surface (203) et des moyens de calcul (202) aptes à mettre en oeuvre le procédé selon l'une des revendications précédentes.

**Patentansprüche**

1. Verfahren zum Charakterisieren der Topgraphie einer Oberfläche (203), umfassend zumindest das Ausführen der folgenden Schritte:

- Messung (102) der Topographie der Oberfläche (203),
- erste Anpassung (104) der Daten aus der Messung (102) der Topographie der Oberfläche (203), die ausgehend von einer ersten Gleichung der Ordnung m durchgeführt wird;
- Filterung (106) von Daten aus der Durchführung der ersten Anpassung (104) unter Löschung eines Teils der Daten aus der Durchführung der ersten Anpassung (104), deren Werte größer als ein Maximalwert und/oder kleiner als ein Minimalwert sind;
- Bestimmung (110) von Anpassungskoeffizienten der Daten aus der Durchführung der Filterung (106), die ausgehend von einer zweiten Gleichung der Ordnung n durchgeführt wird,
- zweite Anpassung (112) der Daten aus der Durchführung der ersten Anpassung (104), die nicht dem Schritt der Filterung (106) unterzogen wurden, die ausgehend von der zweiten Gleichung der Ordnung $n$ und den mit der Durchführung des vorherigen Schritts der Bestimmung (110) bestimmten Koeffizienten durchgeführt wird; wobei $n$ und $m$ positive ganze Zahlen größer oder gleich 1 sind und derart, dass $n \geq m$.

2.  Verfahren nach Anspruch 1,
    wobei die Oberfläche (203) zumindest einem Teil einer Fläche eines elektronischen Chips (204) entspricht, der Muster enthält.

3.  Verfahren nach einem der vorangehenden Ansprüche,
    wobei die Messung (102) der Topographie der Oberfläche (203) zweidimensional über eine Länge größer oder gleich etwa 1 mm erfolgt und/oder derart, dass das Verhältnis zwischen der Länge und einem räumlichen Abtastwert der Messung größer oder gleich etwa 1 000 ist, oder dreidimensional über eine Oberfläche größer oder gleich etwa 1 mm$^2$ und/oder derart, dass das Verhältnis zwischen der Oberfläche und einem räumlichen Abtastwert der Messung größer oder gleich etwa 1 000 000 ist.

4.  Verfahren nach einem der vorangehenden Ansprüche,
    wobei die erste Anpassung (104) und/oder die Bestimmung (110) der Koeffizienten durch Regression erfolgt.

5.  Verfahren nach einem der vorangehenden Ansprüche,
    wobei die erste Gleichung und/oder die zweite Gleichung Polynome oder Gleichungen vom Sinus- oder Cosinustyp sind.

6.  Verfahren nach einem der vorangehenden Ansprüche,
    wobei die Parameter $n$ und $m$ derart sind, dass $m \in [1; 10]$ und/oder $n \in [1; 20]$.

7.  Verfahren nach einem der vorangehenden Ansprüche,
    ferner umfassend zwischen dem Schritt der Filterung (106) und dem Schritt der Bestimmung (110) von Anpassungskoeffizienten das Durchführen eines Schritts der Reduzierung (108) der Auflösung der Daten aus der Durchführung der Filterung (106), wobei der Schritt der Bestimmung (110) der Anpassungskoeffizienten ausgehend von den Daten erfolgt, deren Auflösung reduziert wurde.

8.  Verfahren nach Anspruch 7,
    wobei die Reduzierung (108) der Datenauflösung mit einem Reduktionsfaktor zwischen ca. 2 und 100 erfolgt.

9.  Verfahren nach einem der vorangehenden Ansprüche,
    wobei die Schritte des Verfahrens von der Filterung (106) bis zur zweiten Anpassung (112) der Daten ein- oder mehrmals ausgehend von den Daten aus der vorhergehenden Durchführung der zweiten Anpassung (112) der Daten erfolgen.

10. Verfahren nach einem der vorangehenden Ansprüche,
    wobei die Messung (102) der Topographie der Oberfläche (203) zweidimensional oder dreidimensional mit zumindest einer der nachstehenden Messtechniken erfolgt: mechanische Profilometrie, Rasterkraftmikroskopie, interferometrische Mikroskopie, konfokale Mikroskopie.

11. Vorrichtung (200) zur Charakterisierung der Topographie einer Oberfläche (203), enthaltend Mittel (201) zum Messen der Topographie der Oberfläche (203) und Rechenmittel (202), die dazu geeignet sind, das Verfahren nach einem der vorangehenden Ansprüche durchzuführen.

**Claims**

1.  A method for characterization of a surface (203) topography, comprising at least application of the following steps:

    - measurement (102) of the surface (203) topography;
    - first fitting (104) of data outputted from the measurement (102) of the surface (203) topography, made from an order $m$ first equation;
    - filtering (106) data outputted from application of the first fitting (104), eliminating some of the data outputted from application of the first fitting (104) the values of which are greater than a maximum value and/or less than a minimum value;

- determining (110) fitting coefficients for data outputted from the application of filtering (106), from an order $n$ second equation;

- second fitting (112) of data outputted from application of the first fitting (104) which has not been submitted to the filtering (106), made from the order $n$ second equation and coefficients determined by application of the previous determining (110) step;

$n$ and $m$ being positive integers greater than or equal to 1 and such that $n \geq m$.

2. The method according to claim 1, in which the surface (203) corresponds to at least part of a face of an electronic chip (204) comprising patterns.

3. The method according to one of previous claims, in which the measurement (102) of the surface (203) topography is made in two dimensions over a length greater than or equal to about 1 mm and/or such that the ratio between said length and a spatial sampling value of the measurement is greater than or equal to about 1 000, or in three dimensions over an area greater than or equal to about 1 mm$^2$ and/or such that the ratio between said area and a spatial sampling value of the measurement is greater than or equal to about 1 000 000.

4. The method according to one of previous claims, in which the first fitting (104) and/or the determining (110) of the coefficients is made by regression.

5. The method according to one of previous claims, in which the first equation and/or the second equation are polynomial or sine or cosine type equation.

6. The method according to one of previous claims, in which the parameters $n$ and $m$ are such that $m \in [1;10]$ and/or $n \in [1;20]$.

7. The method according to one of previous claims, also comprising the implementation of a step to reduce (108) the resolution of data outputted from the filtering (106) step, between the filtering (106) step and the step of determining (110) fitting coefficients, the step of determining (110) fitting coefficients being applied using data with a reduced resolution.

8. The method according to claim 7, in which the reduction (108) of the data resolution is applied with a reduction factor of between about 2 and 100.

9. The method according to one of previous claims, in which the steps of the method between the filtering (106) and the second data fitting (112) are applied one or several times using data outputted from a previous application of the second data fitting (112).

10. The method according to one of previous claims, in which the measurement (102) of the surface (203) topography is made in two or three dimensions using at least one of the following measurement techniques: mechanical profilometry, atomic force microscopy, interferometric microscopy, confocal microscopy.

11. A device (200) for characterization of a surface (203) topography comprising means (201) for measuring the surface (203) topography and computation means (202) for performing the method according to one of previous claims.

FIG.1

FIG.2

FIG.3

FIG.4

FIG.5

FIG.6

FIG.7

FIG.8

FIG.9

FIG.10

FIG. 11

**EP 2 806 247 B1**

## RÉFÉRENCES CITÉES DANS LA DESCRIPTION

**Documents brevets cités dans la description**

- US 2004235206 A1
- EP 1921442 A1